# EUROPÄISCHE PATENTANMELDUNG

(11) **EP 3 951 189 A1**
(43) Veröffentlichungstag der Anmeldung: **09.02.2022**
(21) Anmeldenummer: 21189180.9
(22) Anmeldetag: 02.08.2021
(51) Int. Cl.: F16B 5/02, F16B 25/00, F16B 37/12

(54) **VERBINDUNGSMITTEL UND ANORDNUNG MIT EINEM WERKSTÜCK UND EINEM VERBINDUNGSMITTEL**

(30) Priorität: 06.08.2020 DE 102020210002
(71) Anmelder: IMS-Verbindungstechnik GmbH & Co. KG, 74632 Neuenstein (DE)
(72) Erfinder: Schneider, Alexander, 74613 Öhringen (DE); Haberhauer, Sascha, 74635 Kupferzell (DE)
(74) Vertreter: Patentanwälte Ruff, Wilhelm, Beier, Dauster & Partner mbB

(57) **Zusammenfassung**

Die Erfindung betrifft ein Verbindungsmittel (12, 50) zum Einschrauben in ein Werkstück (1) aus Holz oder aus holzartigem Werkstoff mit einem Schaft (3) und einem Befestigungsbereich zum Verbinden mit einem weiteren Verbindungsmittel, insbesondere einer Schraube oder einer Mutter, bei dem der Schaft einen Verbindungsabschnitt (24) und einen Außengewindeabschnitt (26) aufweist, wobei sich der Verbindungsabschnitt sich von einem Bereich des Schafts, der im eingeschraubten Zustand des Verbindungsmittels an einer Oberfläche (20) des Werkstücks angeordnet ist, bis zu dem Außengewindeabschnitt erstreckt, wobei eine Länge des Verbindungsabschnitts größer ist als eine Länge des Außengewindeabschnitts.

## Beschreibung

Die Erfindung betrifft ein Verbindungsmittel zum Einschrauben in ein Werkstück aus Holz, aus Holzfaserwerkstoff oder aus holzartigem Werkstoff. Die Erfindung betrifft auch eine Anordnung mit einem Werkstück und einem erfindungsgemäßen Verbindungsmittel.

Sogenannte Biertischgarnituren bestehen in der Regel aus zwei Bierbänken und einem Biertisch. Bierbank und Biertisch weisen jeweils eine als Sitzplatte beziehungsweise Tischplatte ausgebildete Holzplatte auf, an deren Unterseite klappbare Füße angeordnet sind. Die Füße sind mittels Beschlägen an einer Unterseite der Holzplatte befestigt. Um auch bei extremen Beanspruchungen, beispielsweise Festbetrieb, eine sichere Befestigung der Beschläge zu garantieren, werden die Beschläge mittels durch die Holzplatte durchgesteckter Schlossschrauben befestigt. Die Schraubenköpfe sind dadurch von der Oberseite der Holzplatte her sichtbar. Dies hat zum einen ästhetische Nachteile, zum anderen können nach längerem Gebrauch oder auch wenn die Oberseite der Holzplatte nass geworden ist, in dem Bereich, der den Schraubenkopf umgibt, Holzspreißel entstehen. Weiter sind sogenannte Gewindebuchsen mit einem Außengewinde und einem Innengewinde bekannt, die in Werkstücke aus Metall, Holz oder Kunststoff eingesetzt werden können und die dann die Möglichkeit bieten, eine Maschinenschraube an einem Werkstück zu verankern, ohne dass das Werkstück vollständig von der Maschinenschraube durchsetzt wird. Solche konventionelle Gewindebuchsen bieten bei extremen Beanspruchungen, wie sie bei Biertischgarnituren auftreten können, keine ausreichende Festigkeit.

Mit der Erfindung soll ein Verbindungsmittel bereitgestellt werden, mit dem eine verbesserte Verankerung in einem Werkstück möglich ist.

Erfindungsgemäß ist hierzu ein Verbindungsmittel mit den Merkmalen von Anspruch 1 und eine Anordnung mit den Merkmalen von Anspruch 13 vorgesehen. Vorteilhafte Weiterbildungen der Erfindungen sind in den Unteransprüchen genannt.

Es ist ein Verbindungsmittel zum Einschrauben in ein Werkstück aus Holz oder holzartigem Werkstoff vorgesehen, das einen Schaft und einen Befestigungsbereich zum Verbinden mit einem weiteren Verbindungsmittel, insbesondere einer Schraube oder einer Mutter, aufweist. Der Schaft weist einen Verbindungsabschnitt und einen Außengewindeabschnitt auf. Der Verbindungsabschnitt erstreckt sich von einem Bereich des Schafts, der im eingeschraubten Zustand des Verbindungsmittels an einer Oberfläche des Werkstücks angeordnet ist, bis zu dem Außengewindeabschnitt. Der Verbindungsabschnitt ist glatt ausgebildet, gewindefrei ausgebildet oder mit einer Oberflächenstruktur versehen, die sich in radialer Richtung von maximal 10% des Kerndurchmessers des Schafts über den Kerndurchmesser hinaus erstreckt. Eine Länge des Verbindungsabschnitts ist größer als eine Länge des Außengewindeabschnitts.

Das erfindungsgemäße Verbindungsmittel ist insbesondere zum Einschrauben in Werkstücke aus Massivholz, Leimholz oder Holzfaserwerkstoff geeignet und beispielsweise als Buchse mit Außengewinde und Innengewinde oder als Bolzen mit zwei Außengewinden ausgebildet. Überraschenderweise kann eine Haltekraft und Dauerbelastbarkeit der Verbindung zwischen dem Verbindungsmittel und dem Werkstück dadurch verbessert werden, dass eine Länge des, insbesondere gewindefreien, Verbindungsabschnitts größer ist als eine Länge des Außengewindeabschnitts, wobei der Außengewindeabschnitt zumindest um die Länge des Verbindungsabschnitts unterhalb einer Oberfläche des Werkstücks angeordnet wird, von der aus das Verbindungsmittel eingeschraubt wird. Die Erfindung beruht auf der überraschenden Erkenntnis, dass eine Anordnung des Außengewindeabschnitts im Abstand von einer Oberfläche des Werkstücks, von der aus das Verbindungsmittel eingeschraubt ist, deutlich höhere Auszugskräfte und eine höhere Dauerbelastbarkeit ermöglicht, als wenn sich der Außengewindeabschnitt über die gesamte Länge des Schafts und damit auch bis zu der Oberfläche des Werkstücks, von der aus das Verbindungsmittel eingeschraubt wird, erstreckt. Das Verbindungsmittel kann aus Metall oder Kunststoff bestehen. Der Verbindungsabschnitt kann glatt ausgebildet sein, also im Rahmen einer üblichen Oberflächenrauheit ohne radiale Vorsprünge oder Ausnehmungen. Der Verbindungsabschnitt kann gewindefrei ausgebildet sein, aber beispielsweise mit einzelnen, voneinander beabstandeten hakenartigen Vorsprüngen versehen sein, die einer Bewegung des Verbindungsmittels im Werkstück entgegenwirken, das den Verbindungsabschnitt umgebende Material des Werkstücks aber nicht zerstören, indem beispielsweise Holzfasern durchtrennt werden. Die Vorsprünge können als umlaufende, ringförmige Vorsprünge mit widerhakenartigem Querschnitt ausgebildet sein. Es kann auch ein wendelartiger Vorsprung vorgesehen sein, der um den Schaft im Bereich des Verbindungsabschnitts umläuft. Die Vorsprünge erstrecken sich in jedem Fall um maximal 10% des Kerndurchmessers des Schafts im Verbindungsabschnitt über den Kerndurchmesser hinaus. Dadurch ist sichergestellt, dass das den Verbindungsabschnitt umgebende Material des Werkstücks nicht zerstört oder in seinem Zusammenhalt wesentlich beeinträchtigt ist.

Das erfindungsgemäße Verbindungsmittel ist insbesondere für eine Montage in einem Sackloch vorgesehen. Bei Montage in einer Sacklochbohrung erfolgt eine Belastung des Verbindungsmittels und damit des Werkstücks in Richtung auf die offene Seite des Sacklochs.

Wird mit dem Verbindungsmittel beispielsweise ein Beschlag montiert, so ist die dem Beschlag gegenüberliegende Seite des Werkstücks unbeeinträchtigt und weist insbesondere keine Durchgangsöffnungen mit sichtbaren Schraubenköpfen auf. Dennoch erlaubt das erfindungsgemäße Verbindungsmittel eine hochbelastbare Verankerung von Beschlägen oder sonstigen Bauteilen.

In Weiterbildung der Erfindung bildet ein dem Außengewindeabschnitt abgewandtes Ende des Verbindungsabschnitts entweder ein Ende des Verbindungsmittels oder es schließt sich an das Ende des Verbindungsabschnitts ein Bolzenabschnitt mit Außengewinde an.

In Weiterbildung der Erfindung ist der Außendurchmesser des Bolzenabschnitts kleiner als der Außendurchmesser des Verbindungsabschnitts.

In Weiterbildung der Erfindung ist der Verbindungsabschnitt entweder glatt oder weist eine Oberflächenstruktur auf, die sich in radialer Richtung um maximal 10 % des Kerndurchmessers des Schafts über den Kerndurchmesser hinaus erstreckt.

In Weiterbildung der Erfindung ist die Länge des Verbindungsabschnitts mindestens doppelt so groß wie die Länge des Außengewindeabschnitts, insbesondere dreimal so groß wie die Länge des Außengewindeabschnitts.

Durch eine solche Bemessung kann der Außengewindeabschnitt tief in dem Werkstück und somit weit von der Oberfläche des Werkstücks beabstandet verankert werden. Es wird vermutet, dass das Material des Werkstücks, das zwischen der Oberfläche des Werkstücks, von der aus das Verbindungsmittel eingeschraubt wird, und dem Beginn des Außengewindeabschnitts angeordnet ist, wesentlich zu einer Haltekraft der Verbindung des Verbindungsmittels mit dem Werkstück beiträgt.

In Weiterbildung der Erfindung weist der Gewindeabschnitt mindestens einen umlaufenden Gewindegang auf, der sich über mindestens 360° um den Schaft erstreckt.

Mittels wenigstens eines umlaufenden Gewindegangs kann eine gleichmäßige Beaufschlagung des Materials des Werkstücks erzielt werden, wenn die Verbindung zwischen dem Verbindungsmittel und dem Werkstück belastet wird.

In Weiterbildung der Erfindung beträgt, in radialer Richtung gemessen, eine Höhe der Gewindeflanken zwischen zwei Drittel und fünf Drittel des Durchmessers des Kerndurchmessers des Außengewindeabschnitts.

Beispielsweise beträgt eine Höhe der Gewindeflanke 7,5 mm bei einem Kerndurchmesser des Schafts von 9 mm. Gegenüber konventionellen Holzschrauben ist die Höhe der Gewindeflanken daher sehr groß bemessen. Dies führt zu einer sicheren Verankerung des Verbindungsmittels in dem Werkstück und damit zu einer hohen Dauerbelastbarkeit und hohen Haltekraft. Eine hohe Haltekraft wird dabei nicht nur bei axialem Zug auf das Verbindungsmittel, sondern gerade auch bei schrägem Zug auf das Verbindungsmittel erreicht. Die große Höhe der Gewindeflanken sorgt für eine sichere Verankerung auch bei schräger Belastung. Eine Höhe der Gewindeflanken wird je nach Material eines Werkstücks bemessen. Beispielsweise wird bei einem Verbindungsmittel für Weichhölzer eine große Höhe der Gewindeflanken gewählt, so auch bei der Bemessung der Höhe der Gewindeflanken für den Einsatz in Spanplatten oder Faserwerkstoffen. Für den Einsatz in Hartholz, beispielsweise Baubuche, kann dahingegen eine kleine Höhe der Gewindeflanken gewählt werden.

In Weiterbildung der Erfindung entspricht der Kerndurchmesser des Außengewindeabschnitts dem Durchmesser des Verbindungsabschnitts.

Auf diese Weise ist die Herstellbarkeit des Verbindungsmittels vereinfacht. Gegebenenfalls kann der Kerndurchmesser des Außengewindeabschnitts geringfügig größer sein als der Durchmesser des Verbindungsabschnitts, um ein geringeres Einschraubmoment zu erzielen.

In Weiterbildung der Erfindung ist ein Außendurchmesser des Außengewindeabschnitts mindestens 1,5-mal bis maximal 4-mal so groß, insbesondere 2,7-mal so groß, wie ein Durchmesser des Verbindungsabschnitts.

Durch ein solches, gegenüber konventionellen Schrauben vergleichsweise großes Verhältnis des Außendurchmessers des Außengewindeabschnitts zum Durchmesser des Verbindungsabschnitts wird eine sichere Verankerung des Verbindungsmittels in dem Werkstück erzielt, nicht nur bei axialer Belastung, sondern auch bei schräger Belastung.

In Weiterbildung der Erfindung ist die Antriebsausbildung als Innengewinde oder Außengewinde ausgebildet.

Mittels Innengewinde oder Außengewinde lassen sich hohe Kräfte bei einfacher Montierbarkeit übertragen.

In Weiterbildung der Erfindung ist der Befestigungsbereich als Verlängerung des Schafts ausgebildet, weist einen von einer Kreisform abweichenden Querschnitt auf und ist mit einem Außengewinde versehen.

Durch eine solche Ausbildung kann die Antriebsausbildung mit dem Befestigungsbereich kombiniert werden. Beispielsweise ist der Befestigungsbereich als Kreiszylinder mit wenigstens zwei abgeplatteten Seitenflächen ausgebildet. Auf einen solchen Befestigungsbereich kann dann noch eine konventionelle Mutter aufgeschraubt werden und gleichzeitig kann an den Seitenflächen angegriffen werden, um diese als Antriebsausbildung beim Einschrauben oder Ausschrauben des Verbindungsmittels zu verwenden. Auch wenn der Befestigungsbereich als kreisrundes Außengewinde oder Innengewinde ausgebildet ist, kann dieser als Antriebsausbildung benutzt werden. Eine solche, sehr einfache Ausbildung des Befestigungsbereichs ist speziell dann vorteilhaft, wenn das Verbindungsmittel lediglich einmal eingeschraubt, aber nicht mehr herausgeschraubt werden soll.

In Weiterbildung der Erfindung ist vorgesehen, dass sich auf der, dem Verbindungsabschnitt gegenüberliegenden Seite an den Außengewindeabschnitt ein Einführabschnitt anschließt. Der Einführabschnitt kann als sich in Richtung vom Außengewindeabschnitt weg verjüngender, gewindefreier Bund ausgebildet sein. Der Einführabschnitt kann als Bohrspitze ausgebildet sein.

In Weiterbildung der Erfindung ist vorgesehen, dass der Schaft eine Antriebsausbildung aufweist. Die Antriebsausbildung kann als Innensechskant oder Innentorx ausgebildet sein. Die Antriebsausbildung kann als Innengewinde oder Außengewinde ausgebildet sein.

In Weiterbildung der Erfindung ist vorgesehen, dass der Befestigungsbereich als Verlängerung des Schafts ausgebildet ist, einen von einer Kreisform abweichenden Querschnitt aufweist und/oder mit einem Außengewinde versehen ist.

In Weiterbildung der Erfindung ist der Schaft innen wenigstens abschnittsweise hohl.

Auf diese Weise können auf der Innenseite des Schafts sowohl eine Antriebsausbildung als auch der Befestigungsbereich angeordnet werden. Insbesondere ist der Befestigungsbereich als Innengewinde im Schaft ausgebildet.

In Weiterbildung der Erfindung schließen eine dem Verbindungsabschnitt zugewandte Seite der Gewindeflanken und eine dem gewindefreien Abschnitt abgewandte Seite der Gewindeflanken einen Flankenwinkel zwischen 10° und 20°, insbesondere 15°, ein.

Auf diese Weise können die Gewindeflanken gegenüber konventionellen Holzschrauben vergleichsweise dünn, also mit einer geringen Dicke gemessen parallel zur Mittellängsachse des Schafts, und mit in radialer Richtung großer Erstreckung oder Höhe ausgebildet werden. Dadurch kann eine sichere Verankerung des Verbindungsmittels auch in weichem Holz oder Faserwerkstoff erzielt werden. Speziell kann durch dünne Gewindeflanken mit großer radialer Erstreckung erreicht werden, dass das Material des Werkstoffs möglichst wenig zerstört bzw. in seiner Festigkeit beeinträchtigt wird. Dies ist insbesondere dann vorteilhaft, wenn das Verbindungsmittel senkrecht zum Verlauf der Holzfasern eingeschraubt wird, wie dies beim Einschrauben von der Oberfläche einer Holzplatte her in der Regel der Fall ist. Die Holzfasern reichen dadurch bis an den Kerndurchmesser des Schafts heran, so dass eine sichere Verankerung des Verbindungsmittels gewährleistet ist. Das erfindungsgemäße Verbindungsmittel ist dadurch in besonderer Weise für Anordnungen geeignet, bei denen das Verbindungsmittel quer oder senkrecht zum Faserverlauf eines Holzwerkstoffs eingeschraubt wird.

In Weiterbildung der Erfindung sind die Gewindeflanken des Außengewindeabschnitts asymmetrisch ausgebildet.

Auf diese Weise kann eine noch deutlich verbesserte Verankerung des Verbindungsmittels in dem Werkstück erzielt werden, gerade auch bei nicht nur axialer, sondern auch schräger Belastung der Verbindung.

In Weiterbildung der Erfindung schließt eine dem Verbindungsabschnitt zugewandte Seite der Gewindeflanken mit der Mittellängsachse des Schafts einen Winkel von 90° bis 95°, insbesondere 91°, ein.

In Weiterbildung der Erfindung schließt eine dem Verbindungsabschnitt abgewandte Seite der Gewindeflanken mit der Mittellängsachse des Schafts einen Winkel ein, der größer ist als der Winkel, den die dem Verbindungsabschnitt zugewandte Seite der Gewindeflanken mit der Mittellängsachse des Schafts einschließt.

Auf diese Weise können nicht nur hohe Auszugskräfte erzielt werden, sondern es ist auch ohne weiteres möglich, die Gewindeflanken ausreichend stabil auszubilden.

In Weiterbildung der Erfindung beträgt eine in axialer Richtung des Schafts gemessene Dicke der Gewindeflanken am Übergang zum Kern des Außengewindeabschnitts zwischen einem Drittel und einem Fünftel der radialen Erstreckung der Gewindeflanken.

Die Gewindeflanken können dadurch in axialer Richtung des Schafts gesehen oder parallel zur Mittellängsachse des Schafts gemessen sehr dünn ausgebildet werden. Idealerweise werden die Gewindeflanken so dünn wie möglich ausgebildet, um das Material des Werkstücks beim Einschrauben möglichst wenig zu beschädigen.

In Weiterbildung der Erfindung ist ein Übergang zwischen dem Kern des Außengewindeabschnitts und den Gewindeflanken ausgerundet.

Auf diese Weise wird ein Splittern des Holzes beim Eindrehen vermieden.

In Weiterbildung der Erfindung ist eine radial außen liegende Außenkante der Gewindeflanken abgerundet.

Wenn die Außenkante der Gewindeflanken nicht scharfkantig ausgeführt ist, wird ein Splittern des Materials des Werkstücks, insbesondere des Holzes, beim Eindrehen vermieden. Dies sorgt für eine besonders sichere Verankerung des Verbindungsmittels in dem Werkstück.

In Weiterbildung der Erfindung ist ein, in einer Blickrichtung parallel zur Mittellängsachse des Schafts gesehen, in Eindrehrichtung vorne liegendes Ende der Gewindeflanken konvex gekrümmt.

Das Material des Werkstücks wird dadurch beim Einschrauben des Verbindungsmittels durch das konvex gekrümmte Ende der Gewindeflanken allmählich radial nach außen verdrängt, so dass ein Splittern des Holzes vermieden wird.

In Weiterbildung der Erfindung verringert sich eine Dicke der Gewindeflanke, parallel zur Mittellängsachse des Schafts gesehen an einem in Eindrehrichtung vorne liegenden Ende der Gewindeflanken.

Beim Einschrauben des Verbindungsmittels verdrängt die Gewindeflanke das Material des Werkstücks auch in axialer Richtung nur allmählich, bis die endgültige Dicke oder maximale axiale Ausdehnung der Gewindeflanke erreicht ist. Auch dadurch wird ein Splittern des Holzes beim Einschrauben des Verbindungsmittels verhindert.

In Weiterbildung der Erfindung ist ein in Eindrehrichtung hinten liegendes Ende der Gewindeflanken konvex gekrümmt, gesehen in einer Blickrichtung parallel zur Mittellängsachse des Schafts.

Dadurch wird das Schließen des durch die Gewindeflanke erzeugten Schlitzes im Material des Werkstücks erleichtert. Zwischen der Oberfläche des Werkstücks, von der aus das Verbindungsmittel in das Werkstück eingeschraubt ist, und dem Beginn des Außengewindeabschnitts kann sich der durch das Einschrauben der Gewindeflanken gebildete Schlitz dadurch schließen. Dies sorgt für eine besonders sichere Verankerung des Verbindungsmittels, nicht nur bei axialer Belastung, sondern auch bei schräger Belastung.

In Weiterbildung der Erfindung verringert sich eine Dicke der Gewindeflanke an einem in Eindrehrichtung hinten liegenden Ende, gemessen parallel zur Mittellängsachse des Schafts.

Auch dadurch wird das Schließen des durch die Gewindeflanke oder die Gewindeflanken erzeugten Schlitzes in dem Material des Werkstücks erleichtert.

In Weiterbildung der Erfindung ist das Verbindungsmittel mittels Spritzgießen hergestellt.

Gerade die dünnen Gewindeflanken des erfindungsgemäßen Verbindungsmittels, die gleichzeitig eine große radiale Erstreckung aufweisen, lassen sich mittels Spritzgießen, insbesondere mittels Zinkdruckguss, Aluguss oder Spritzgießen von Kunststoffen sehr maßgenau und mit hoher Festigkeit herstellen.

In Weiterbildung der Erfindung ist vorgesehen, dass der Verbindungsabschnitt mit sich in radialer Richtung erstreckenden Verzahnungselementen versehen ist. Die Verzahnungselemente können einen widerhakenartigen Querschnitt aufweisen, wobei eine dem Außengewindeabschnitt abgewandte Seite der Verzahnungselemente mit einer Mittellängsachse des Schafts einen Winkel von 90° oder weniger einschließt und eine dem Außengewindeabschnitt zugewandte Seite der Verzahnungselemente abgeschrägt ist und auf die Mittellängsachse zuläuft. Die Verzahnungselemente können mehrere um den Schaft umlaufende Vorsprünge aufweisen. Die Verzahnungselemente können einen wendelförmig um den Schaft umlaufenden Vorsprung aufweisen.

Bei einer erfindungsgemäßen Anordnung mit einem Werkstück und einem erfindungsgemäßen Verbindungsmittel ist ein Ende des gewindefreien Abschnitts des Schafts im Bereich einer ersten Oberfläche des Werkstücks angeordnet und der Außengewindeabschnitt ist vollständig innerhalb des Werkstücks angeordnet.

Aufgrund der speziellen Ausbildung des erfindungsgemäßen Verbindungsmittels ist der Außengewindeabschnitt dann im Abstand von der ersten Oberfläche des Werkstücks angeordnet. Dadurch kann eine besonders sichere Verankerung des Verbindungsmittels in dem Werkstück erzielt werden.

Der Außengewindeabschnitt kann vollständig in einer Sacklochbohrung innerhalb des Werkstücks angeordnet sein.

In Weiterbildung der Erfindung ist das Werkstück plattenförmig und weist eine Dicke 2C auf, wobei der Außengewindeabschnitt mindestens um die Länge C von der ersten Oberfläche des Werkstücks beabstandet ist.

Auf diese Weise kann das Außengewinde also in der von der ersten Oberfläche aus gesehen unteren Hälfte des Werkstücks angeordnet werden. Dies sorgt für eine besonders sichere Verankerung des Verbindungsmittels, gerade auch bei nicht nur axialer, sondern auch schräger Belastung des Verbindungsmittels.

In Weiterbildung der Erfindung ist das Werkstück als Sitzplatte einer Bierbank oder als Tischplatte eines Biertisches ausgebildet.

Gerade die bei professionellem Gebrauch von Bierbänken und Biertischen auftretenden Belastungen können durch die erfindungsgemäße Anordnung sicher und auch bei langjährigem Betrieb aufgenommen werden.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, dargestellten und beschriebenen Ausführungsformen lassen sich dabei in beliebiger Weise miteinander kombinieren, ohne den Rahmen der Erfindung zu überschreiten. Dies gilt auch für die Kombination von Einzelmerkmalen ohne weitere Einzelmerkmale, mit denen sie im Zusammenhang beschrieben oder dargestellt sind. In den Zeichnungen zeigen:
- Fig. 1: eine schematische Schnittansicht einer erfindungsgemäßen Anordnung,
- Fig. 2: eine Seitenansicht des Verbindungsmittels aus Fig. 1,
- Fig. 3: eine Ansicht des Verbindungsmittels der Fig. 2 von oben,
- Fig. 4: eine Schnittansicht des Verbindungsmittels der Fig. 2,
- Fig. 5: eine Ansicht des Verbindungsmittels der Fig. 2 von schräg oben,
- Fig. 6: eine Ansicht des Verbindungsmittels der Fig. 2 von schräg unten,
- Fig. 7: eine weitere Ansicht des Verbindungsmittels der Fig. 2 von schräg unten unter anderem Blickwinkel als in Fig. 6,
- Fig. 8: eine weitere Ansicht des Verbindungsmittels der Fig. 2 von schräg unten unter anderem Blickwinkel als in Fig. 6,
- Fig. 9: eine weitere Ansicht des Verbindungsmittels der Fig. 2 von schräg unten unter anderem Blickwinkel als in Fig. 6,
- Fig. 10: eine Seitenansicht eines erfindungsgemäßen Verbindungsmittels gemäß einer zweiten Ausführungsform,
- Fig. 11: eine Ansicht des Verbindungsmittels der Fig. 10 von oben,
- Fig. 12: eine Schnittansicht des Verbindungsmittels der Fig. 10,
- Fig. 13: eine Ansicht des Verbindungsmittels der Fig. 10 von schräg oben,
- Fig. 14: eine weitere Ausführungsform eines erfindungsgemäßen Verbindungsmittels,
- Fig. 15: eine Seitenansicht des Verbindungsmittels der Fig. 14,
- Fig. 16: eine Ansicht auf die Schnittebene B-B in Fig. 15,
- Fig. 17: die vergrößerte Einzelheit C aus Fig. 16 und
- Fig. 18: die Einzelheit D aus Fig. 15.

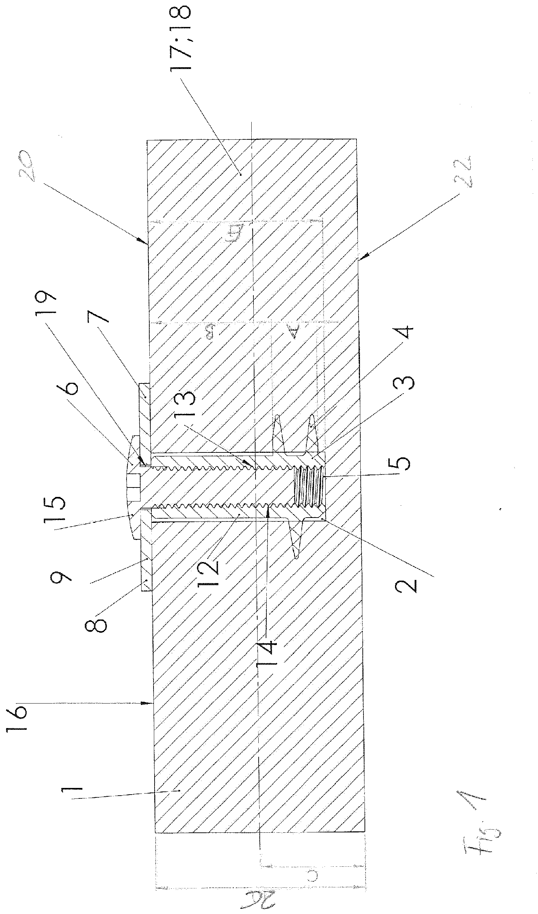

Fig. 1 zeigt eine Schnittansicht auf eine Anordnung mit einem Werkstück 1, das als Platte ausgebildet ist. Insbesondere stellt das Werkstück 1 eine Sitzplatte einer Bierbank oder eine Tischplatte eines Biertisches aus Leimholz dar. Als Leimholz werden Abschnitte aus Massivholz, speziell Kiefernholz, bezeichnet, die miteinander verleimt sind, um dann eine größere Platte zu bilden. Das Werkstück 1 weist eine Dicke 2C auf, die zwischen einer ersten Oberfläche 20 und einer zweiten Oberfläche 22 gemessen ist. Die erste, in Fig. 1 obenliegende Oberfläche 20 würde im Falle eines Biertisches oder einer Bierbank eine Unterseite der Sitzplatte oder Tischplatte bilden. Die zweite, in Fig. 1 untenliegende Oberfläche 22 würde die Oberseite einer Sitzplatte oder Tischplatte bilden. In Fig. 1 ist eine parallel zur ersten Oberfläche 20 und zweiten Oberfläche 22 verlaufende Mittellinie eingezeichnet, die infolgedessen im Abstand C von der ersten Oberfläche 20 und auch im Abstand C von der zweiten Oberfläche 22 verläuft.

In das Werkstück 1 ist ausgehend von der ersten Oberfläche 20 eine zylindrische Sacklochbohrung 2 eingebracht. Die Sacklochbohrung 2 erstreckt sich über die Mittellinie des Werkstücks 1 hinaus und weist eine Tiefe E auf. Die Tiefe E ist größer als die Länge C, aber kleiner als 2C. Bei der dargestellten Ausführungsform beträgt die Tiefe des Sacklochs 2 fünf Sechstel der Dicke 2C des Werkstücks 1. Vorteilhafterweise kann die Tiefe E des Sacklochs 2 zwischen 4,5 Sechstel und 5,5 Sechstel der Dicke 2C des Werkstücks 1 betragen. Das Sackloch 2 geht dadurch nicht bis zur zweiten Oberfläche 22 des Werkstücks 1 durch und erstreckt sich dennoch vergleichsweise weit in die in Fig. 1 untere Hälfte des Werkstücks 1 hinein.

In die Sacklochbohrung 2 ist ein erfindungsgemäßes Verbindungsmittel 12 eingesetzt. Das Verbindungsmittel 12 ist als Gewindebuchse ausgebildet und wird von der ersten Oberfläche 20 des Werkstücks 1 her in die Sacklochbohrung 2 eingeschraubt, wobei bei der dargestellten Ausführungsform das Verbindungsmittel 12 genauso lang ist wie die Tiefe E der Sacklochbohrung 2. Ein in Fig. 1 oberes Ende des Verbindungsmittels 12 ist dadurch bündig mit der ersten Oberfläche 20 des Werkstücks 1 angeordnet und ein in Fig. 1 unteres Ende des Verbindungsmittels 12 liegt auf dem Grund der Sacklochbohrung 2 auf. Im Rahmen der Erfindung kann das Verbindungsmittel 12 durchaus kürzer sein als die Tiefe E der Sacklochbohrung 2. Es ist im Rahmen der Erfindung auch möglich, dass das Verbindungsmittel 12 beispielsweise eine Bohrspitze aufweist, um die Sacklochbohrung 2 beim Einschrauben von der ersten Oberfläche 20 her selbst herzustellen.

Bei der dargestellten Ausführungsform ist der Durchmesser der Sacklochbohrung 2 geringfügig größer dargestellt als der Außendurchmesser des Schafts des Verbindungsmittels 12. Im Rahmen der Erfindung kann der Innendurchmesser der Sacklochbohrung 2 aber auch gleich groß sein wie der Außendurchmesser des Schafts 3 des Verbindungsmittels 12 oder sogar geringfügig kleiner sein als der Außendurchmesser des Schafts 3 des Verbindungsmittels 12.

Das Verbindungsmittel 12 weist, wie ausgeführt wurde, den Schaft 3 auf, der hohl und auf der Innenseite der Innenbohrung 5 mit einem Innengewinde 13 versehen ist. Auf seiner Außenseite ist der Schaft 3 bis zu einer Länge B ausgehend von dem in Fig. 1 oben liegenden Ende des Schafts glatt. An den glatten Verbindungsabschnitt mit der Länge B schließt sich ein weiterer Abschnitt mit einem Außengewinde 4 an, der die Länge A hat. In Fig. 1 in Richtung auf die zweite Oberfläche 22 zu schließt sich an den Außengewindeabschnitt mit dem Außengewinde 4 noch ein Einführabschnitt an, in dem der Schaft 3 kegelstumpfförmig verjüngt ist. Bei dem erfindungsgemäßen Verbindungsmittel 12 ist die Länge B des glatten, gewindefreien Verbindungsabschnitts deutlich größer und mindestens doppelt so groß wie die Länge A des Außengewindeabschnitts mit dem Außengewinde 4. Bei der dargestellten Ausführungsform ist die Länge B etwa dreimal so groß wie die Länge A.

Der glatte, nicht mit einem Außengewinde versehene Abschnitt des Schafts 3 mit der Länge B muss im Rahmen der Erfindung nicht notwendigerweise glatt ausgeführt sein, sondern kann auch eine raue Oberfläche oder beispielsweise auch sich in axialer Richtung erstreckende Längsrippen oder umlaufende Vorsprünge, auch einen wendelförmig umlaufenden Vorsprung oder mehrere voneinander beabstandete Vorsprünge aufweisen. Im Rahmen der Erfindung ist der Abschnitt mit der Länge B entweder glatt oder weist eine Oberflächenstruktur auf, die sich in radialer Richtung um maximal 10% des Schafts über den Kerndurchmesser hinauserstreckt.

Die Länge A des Außengewindeabschnitts ist relativ zur Steigung des Außengewindes 4 so bemessen, dass der Außengewindeabschnitt mindestens einen umlaufenden Gewindegang aufweist, der sich also über mindestens 360° um den Schaft erstreckt. Bei der dargestellten Ausführungsform erstreckt sich das Außengewinde 4 über etwas mehr als 360° um den Schaft. Wie noch erläutert werden wird, steigt eine radiale Erstreckung oder Höhe der Gewindeflanken am Beginn und am Ende des Außengewindes 4 allmählich an. Im Rahmen der Erfindung ist vorgesehen, dass der Gewindegang sich mit konstanter radialer Höhe über mindestens 360° um den Schaft 3 herum erstreckt.

In das Innengewinde 13 des Verbindungsmittels 12 ist eine Maschinenschraube 6 mit einem Außengewinde 14 eingeschraubt. Die Maschinenschraube 6 weist einen Kopf 15 mit einer Antriebsausbildung und einen Schaft mit dem Außengewinde 14 auf. Der Schaft mit dem Außengewinde 14 ist etwas kürzer als das Innengewinde 5 des Verbindungsmittels 12.

Zwischen dem Kopf 15 der Maschinenschraube 6 und der ersten Oberfläche 20 des Werkstücks 1 ist ein Beschlag 7 angeordnet, der Teil eines im Übrigen nicht dargestellten Gelenkflansches einer Bierbank oder eines Biertisches bildet. Der Beschlag 7 liegt mit seiner Unterseite an der ersten Oberfläche 20 an und der Kopf 15 der Maschinenschraube 6 drückt die Oberseite des Beschlags 7 in Richtung auf das Werkstück 1. Auf den Beschlag 7 wirkende Kräfte werden dadurch mittels der Maschinenschraube 6 und des Verbindungsmittels 12 in das Werkstück 1 eingeleitet. Eine Belastung des Gelenkflansches 7 erfolgt dabei nicht nur in axialer Richtung zu der Maschinenschraube 6, sondern auch schräg hierzu.

Anhand der Fig. 1 ist zu erkennen, dass der Außengewindeabschnitt mit dem Außengewinde 4 des Verbindungsmittels 12 um die Länge B von der ersten Oberfläche 20 des Werkstücks 1 beabstandet ist. In der Darstellung der Fig. 1 ist das Außengewinde 4 des Verbindungsmittels 12 somit in der unteren Hälfte des Werkstücks 1 angeordnet. Dies sorgt für eine sehr sichere Verankerung des Verbindungsmittels 12 in dem Werkstück 1, gerade auch bei schräg zur Mittellängsachse des Verbindungsmittels 12 wirkender Belastung des Beschlags 7, in Fig. 1 also nach schräg oben links und rechts. Das tief unterhalb der ersten Oberfläche 20 des Werkstücks 1 angeordnete Außengewinde 4 sorgt für einen sicheren Halt des Verbindungsmittels 12 im Werkstück 1, wenn der Beschlag 7 schräg von der Oberfläche 20 weg belastet wird. Solche Belastungen können ohne weiteres auftreten, wenn Personen auf der zweiten Oberfläche 22 stehen oder tanzen, also auf der Oberseite einer Bierbank oder eines Biertisches.

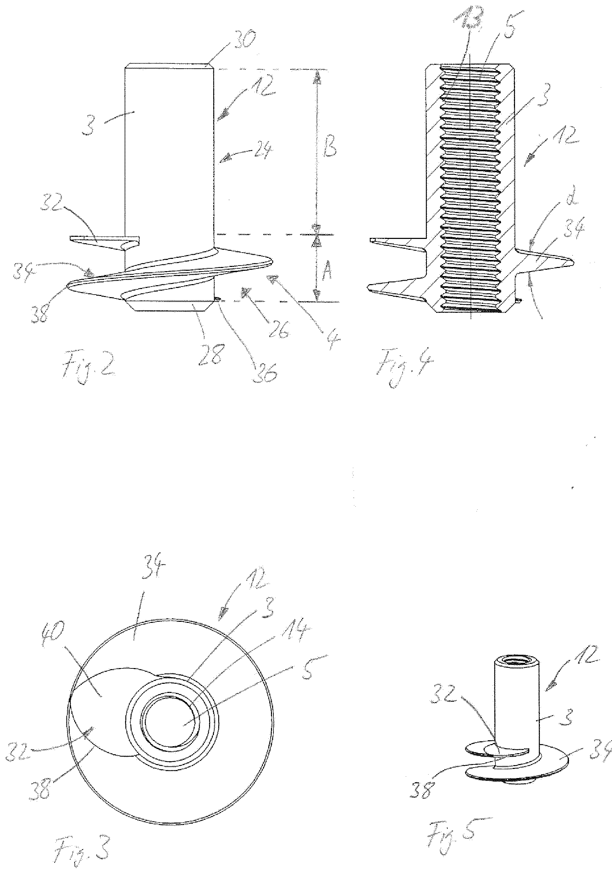

Die Darstellung der Fig. 2 zeigt eine Seitenansicht des Verbindungsmittels 12. Wie ausgeführt wurde, weist das Verbindungsmittel 12 einen Schaft 3 auf, der einen kreiszylindrischen, gewindefreien und bei der dargestellten Ausführungsform glatten Verbindungsabschnitt 24 mit der Länge B und einen Außengewindeabschnitt 26 mit der Länge A aufweist. An den Außengewindeabschnitt 26 schließt sich gegenüber dem glatten Verbindungsabschnitt 24 ein Einführabschnitt 28 an, der bei der dargestellten Ausführungsform kegelstumpfförmig verjüngt ausgebildet ist. Der glatte, kreiszylindrische Verbindungsabschnitt 24 ist an seinem in Fig. 2 oberen Ende, also gegenüber dem Einführabschnitt 28, mit einer kegelstumpfförmigen Verjüngung 30 versehen.

In Fig. 2 ist zu erkennen, dass ein in Eindrehrichtung des Außengewindes 4 hinten liegendes Ende 32 der umlaufenden Gewindeflanke 34 verjüngt ist, also in axialer Richtung gesehen eine sich verringernde Dicke aufweist. Dies ist auch gut anhand der Schnittansicht der Fig. 4 zu erkennen.

Weiter ist zu erkennen, dass der Übergang von der Gewindeflanke 24 zum Schaft 3 ausgerundet ist. Dadurch kann ein Splittern des Holzes beim Einschrauben des Außengewindes 4 verhindert werden.

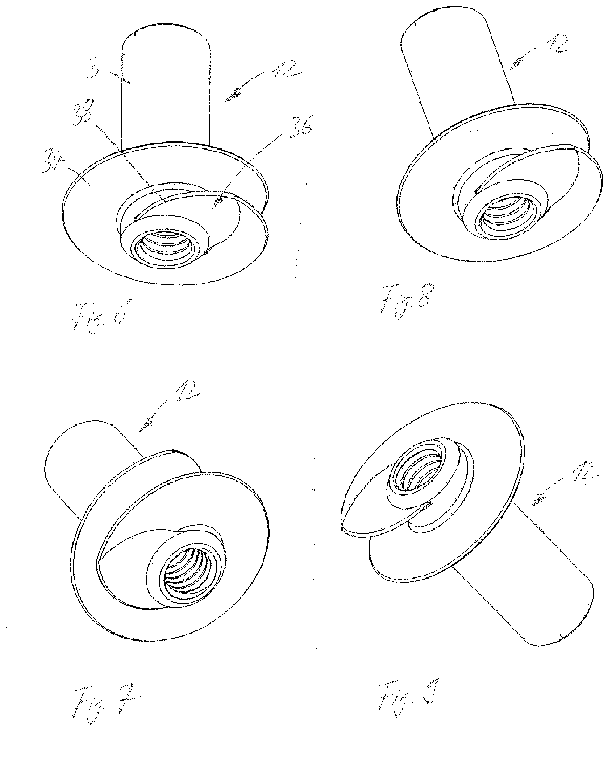

Das in Eindrehrichtung vorne liegende Ende 36 der Gewindeflanke 34 ist ebenfalls in axialer Richtung sich verjüngend ausgebildet, wie noch anhand der Fig. 6 bis 9 erläutert wird. In den Fig. 2 bis 9 ist weiter zu erkennen, dass sowohl das in Einschraubrichtung vorne liegende Ende 36 als auch das in Einschraubrichtung hinten liegende Ende 32 der Gewindeflanke 34 in einer konvexen Krümmung auf den Schaft 3 zuläuft. Beim Einschrauben wird dadurch das Material des Werkstücks 1 durch die Gewindeflanke allmählich radial nach außen verdrängt und hinter dem in Einschraubrichtung hinten liegenden Ende 32 kann sich der durch die Gewindeflanke 34 gebildete Schlitz im Material des Werkstücks 1 wieder allmählich schließen.

Fig. 2 lässt ebenfalls erkennen, dass eine außen liegende Kante 38 der Gewindeflanke 34 abgerundet ist. Auch dadurch wird ein Splittern des Holzes beim Einschrauben des Außengewindes 4 verhindert.

Fig. 3 zeigt eine Ansicht des erfindungsgemäßen Verbindungsmittels 12 von oben. Zu erkennen ist das Innengewinde 13 in der Innenbohrung 5 im Schaft 3 des Verbindungsmittels 12. Weiter zu erkennen ist die konvex gekrümmt auf den Schaft 3 zulaufende Außenkante 38 der Gewindeflanke 34 im Bereich des in Einschraubrichtung hinten liegenden Endes 32 der Gewindeflanke 34. In Fig. 3 zu erkennen ist auch der sich verjüngende Bereich 40 der Gewindeflanke 34, in dem sich also in axialer Richtung die Höhe oder die Dicke der Gewindeflanke 34 verringert.

Fig. 4 zeigt eine Schnittansicht des Verbindungsmittels 12 der Fig. 2. Zu erkennen ist in Fig. 4, dass die Gewindeflanke 34 vergleichsweise dünn ist und in radialer Richtung gesehen eine im Vergleich zur axialen Dicke große radiale Erstreckung aufweist. In radialer Richtung gesehen beträgt die Höhe oder Erstreckung der Gewindeflanken zwischen zwei Drittel und fünf Drittel des Durchmessers des Kerns des Schafts 3. Dies wird auch dadurch erreicht, dass ein Flankenwinkel α der Gewindeflanke 34 klein ist und zwischen 10° und 20°, insbesondere 15°, beträgt.

Zu erkennen ist auch die über die gesamte Länge der Innenbohrung 5 durchgehende Ausbildung des Innengewindes 14 im Schaft 3 des Verbindungsmittels 12.

Die Darstellung der Fig. 5 zeigt eine Ansicht des Verbindungsmittels 12 von schräg oben. In dieser Ansicht gut zu erkennen ist die sich verjüngende und mit konvexer Außenkante 38 auf den Schaft 3 zulaufende Ausbildung des in Einschraubrichtung hinten liegenden Endes 32 der Gewindeflanke 34.

Fig. 6 zeigt eine Ansicht des Verbindungsmittels 12 von schräg unten. Auch das in Einschraubrichtung vorne liegende Ende 36 weist eine sich allmählich bis zum Ende des Gewindegangs 34 verringernde axiale Dicke oder Höhe auf und die Außenkante 38 des Gewindegangs 36 läuft konvex gekrümmt auf den Schaft 3 zu. Beim Einschrauben des Verbindungsmittels 12 verdrängt die Außenkante 38 somit das Material des Werkstücks 1 allmählich radial nach außen, bis die vollständige radiale Erstreckung des Gewindegangs 34 erreicht ist. Gleichzeitig verdrängt das in Einschraubrichtung vorne liegende Ende 36 des Gewindegangs 34 das Material des Werkstücks 1 in axialer Richtung allmählich nach oben und unten, bis die endgültige axiale Dicke des Gewindegangs 34 erreicht ist. Das Material des Werkstücks 1 wird dadurch allmählich und schonend durch den Gewindegang 34 beim Einschrauben verdrängt, so dass ein Splittern des Materials, insbesondere ein Splittern des Holzes, vermieden wird.

Die Fig. 7 bis 9 zeigen weitere Ansichten des Verbindungsmittels 12 der Fig. 2 von schräg unten.

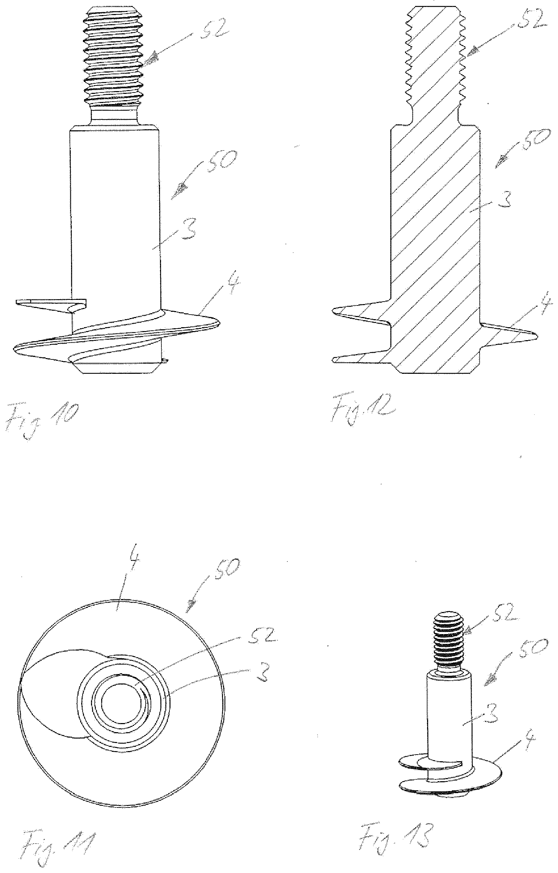

Fig. 10 zeigt ein Verbindungsmittel 50 gemäß einer zweiten Ausführungsform der Erfindung. Das Verbindungsmittel 50 ist sehr ähnlich zum Verbindungsmittel 12 der Fig. 1 bis 9 ausgebildet, so dass gleich ausgebildete Elemente mit denselben Bezugszeichen versehen sind und lediglich die Unterschiede zum Verbindungsmittel 12 erläutert werden. Das Verbindungsmittel ist als Bolzen mit zwei Außengewinden ausgebildet.

Wie das Verbindungsmittel 12 weist das Verbindungsmittel 50 einen Schaft 3 auf, der an seinem in Fig. 10 unteren Ende mit einem Außengewinde 4 versehen ist. Der Außenumfang des Schafts 3 und das Außengewinde 4 sind identisch zu dem Verbindungsmittel 12 ausgebildet.

Der Schaft 3 ist im Unterschied zum Verbindungsmittel 12 aber massiv ausgebildet, vgl. die Schnittansicht der Fig. 12. An das in Fig. 10 obere Ende des Schafts 3 schließt sich als Befestigungsbereich ein Bolzenabschnitt 52 mit Außengewinde an. Bei Anordnung in dem Werkstück 1 der Fig. 1 würde das in Fig. 10 obere Ende des Schafts 3 bündig mit der ersten Oberfläche 20 angeordnet werden, so dass lediglich der Bolzenabschnitt 52 durch den Beschlag 7 hindurchragen würde. Die Befestigung des Beschlags 7 würde dann mittels einer nicht dargestellten Mutter erfolgen, die auf das Außengewinde des Bolzenabschnitts 52 aufgeschraubt würde.

Die Funktionsweise des Verbindungsmittels 12 ist abgesehen von den erläuterten Unterschieden aber gleich wie die erläuterte Funktionsweise des Verbindungsmittels 12.

Der Bolzenabschnitt 52 des Verbindungsmittels 50 weist keine separate Antriebsausbildung auf. Zum Einschrauben des Verbindungsmittels 50 wird ein Einschraubwerkzeug mit einem Innengewinde auf den Bolzenabschnitt 52 aufgeschraubt, um dadurch das Verbindungsmittel 50 in Rotation um seine Mittellängsachse zu versetzen und in das Werkstück 1 einschrauben zu können.

Fig. 11 zeigt eine Ansicht des Verbindungsmittels 50 von oben, Fig. 12, wie ausgeführt wurde, eine Schnittansicht des Verbindungsmittels 50 und Fig. 13 eine Ansicht auf das Verbindungsmittel 50 von schräg oben.

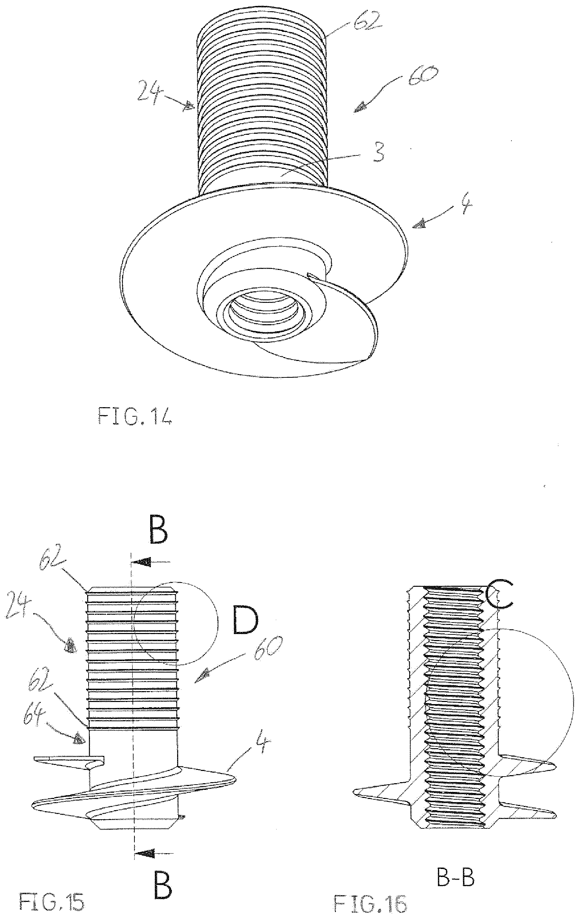

Fig. 14 zeigt eine weitere Ausführungsform eines erfindungsgemäßen Verbindungsmittels 60 gemäß der Erfindung. Das Verbindungsmittel 60 ist sehr ähnlich zum Verbindungsmittel 12 der Fig. 1 bis 9 ausgebildet, so dass gleich ausgebildete Elemente mit denselben Bezugszeichen versehen sind und lediglich die Unterschiede zum Verbindungsmittel 12 erläutert werden. Das Verbindungsmittel 60 ist als Gewindebuchse ausgebildet und weist als einzigen Unterschied zum Verbindungsmittel 12 im Verbindungsabschnitt 24 des Schafts 3 eine Oberflächenstruktur auf, die aus mehreren in axialer Richtung gleichmäßig voneinander beabstandeten umlaufenden Vorsprüngen besteht. Im Rahmen der Erfindung können die umlaufenden Vorsprünge auch ungleichmäßig voneinander beabstandet sein. Im Vergleich zum Außengewinde 4 ist die radiale Erstreckung der umlaufenden Vorsprünge 62 sehr gering. Die umlaufenden Vorsprünge 62 sollen lediglich eine zusätzliche Auszugssicherung des Verbindungsmittels 60 in einem Werkstück bewirken. Sie sollen aber keine dem Außengewinde 4 vergleichbare Haltewirkung aufweisen. Die Vorsprünge 62 sind vor allem in radialer Richtung so kurz ausgebildet, dass sie das Material des den Verbindungsabschnitt 24 umgebenden Werkstücks nicht zerstören oder schwerwiegend beschädigen können. Denn das den Verbindungsabschnitt 24 umgebende Material des Werkstücks sorgt für einen stabilen Gegenhalt des Verbindungsmittels 60, indem es, siehe Fig. 1, zwischen dem Außengewinde 4 und dem Beschlag 7 komprimiert wird.

Anstelle der mehreren ringförmigen, umlaufenden und senkrecht zur Mittellängsachse angeordneten Vorsprünge 62 können auch schräg zur Mittellängsachse angeordnete ringförmige Vorsprünge vorgesehen sein, ein wendelförmig umlaufender und sich im Bereich des Verbindungsabschnitts 24 erstreckender Vorsprung oder auch mehrere, in Umfangsrichtung voneinander beabstandete einzelne Vorsprünge. Wesentlich ist, dass sich die Oberflächenstruktur im Verbindungsabschnitt 24 in radialer Richtung um maximal 10 % des Kerndurchmessers des Schafts im Verbindungsabschnitt 24 über den Kerndurchmesser hinaus erstreckt. Auf diese Weise ist sichergestellt, dass das Material des den Verbindungsabschnitt 24 umgebenden Werkstücks durch die Oberflächenstruktur nicht nennenswert beschädigt oder gar zerstört wird, insbesondere dass nach Möglichkeit keine oder nur sehr wenig Holzfasern durchgeschnitten oder aufgerissen werden.

Das Verbindungsmittel 60 wird in gleicher Weise wie das Verbindungsmittel 12 in ein Werkstück eingebracht.

Fig. 15 zeigt eine Seitenansicht des Verbindungsmittels 60. Es sind insgesamt fünfzehn gleichmäßig voneinander beabstandete Vorsprünge 62 im Bereich des Verbindungsabschnitts 24 vorgesehen. Zwischen dem Beginn des Außengewindes 4 und dem in Fig. 5 untersten ringförmigen Vorsprung 62 ist noch ein glatter Bereich des Verbindungsabschnitts 24 angeordnet, der eine Länge hat, die etwa der Gewindesteigung des Außengewindes 4 entspricht.

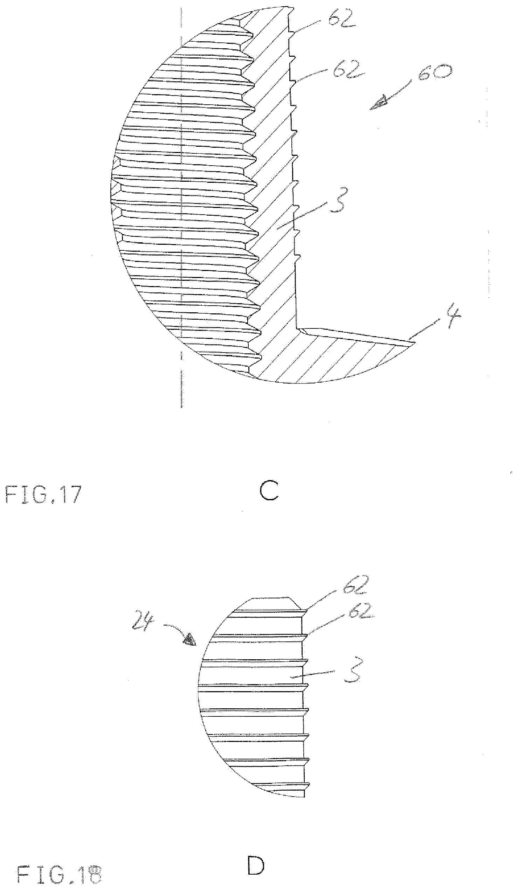

Fig. 16 zeigt eine Ansicht auf die Schnittebene B-B in Fig. 15. Fig. 17 zeigt die vergrößerte Einzelheit C aus Fig. 16. In Fig. 17 ist zu erkennen, dass jeder der umlaufenden Vorsprünge 62 einen widerhakenartigen Querschnitt hat. Die ringförmigen Vorsprünge 62 haben also einen solchen Querschnitt, der einem Herausziehen des Verbindungsmittels 60 in Fig. 17 nach oben entgegenwirkt. Hierzu ist eine dem Außengewinde 4 abgewandte Seite der Vorsprünge senkrecht zu einer Mittellängsachse des Schafts 3 angeordnet. Die dem Außengewinde 4 abgewandte Seite kann auch mit der Mittellängsachse des Schafts 3 einen Winkel von weniger als 90° einschließen, um die Hakenwirkung der Vorsprünge 62 zu verstärken.

Eine dem Außengewinde 4 zugewandte Seite jedes Vorsprungs 62 ist hingegen abgeschrägt, so dass sich die Vorsprünge 62 vergleichsweise leicht in Fig. 17 nach unten drücken lassen. Beim Einschrauben des Verbindungsmittels 60 setzen die Vorsprünge 62 der Bewegung in Richtung der Mittellängsachse des Schafts 3 beim Einschrauben somit nur einen geringen Widerstand entgegen. Die dem Außengewinde 4 zugewandte Seite der Vorsprünge 62 ist daher abgeschrägt und läuft auf die Mittellängsachse zu.

Fig. 18 zeigt die Einzelheit D aus Fig. 15. In dieser Ansicht ist erneut der widerhakenartige Querschnitt der Vorsprünge 62 zu erkennen und es ist auch zu erkennen, dass die Vorsprünge 62 in radialer Richtung nur geringfügig über den Kerndurchmesser des Schafts 3 im Verbindungsabschnitt 24 hinausragen. Im Rahmen der Erfindung ragen die Vorsprünge 62 um maximal 10 % des Kerndurchmessers des Schafts 3 im Verbindungsabschnitt 24 über den Kerndurchmesser hinaus.

Fig. 18 lässt in Verbindung mit Fig. 17 aber auch erkennen, dass die Vorsprünge 62 keine scharfe umlaufende Kante aufweisen. Vielmehr ist die umlaufende Kante der Vorsprünge 62 leicht abgeplattet. Dies erfolgt insbesondere aus produktionstechnischen Gründen, da das Verbindungsmittel 60 beispielsweise mittels Zinkdruckguss hergestellt wird. Es kann durch die leichte Abplattung der äußeren Kante der Vorsprünge 62 erreicht werden, dass von den Vorsprüngen 62 keine Verletzungsgefahr ausgeht.

## Patentansprüche

1. Verbindungsmittel (12; 50) zum Einschrauben in ein Werkstück (1) aus Holz, aus Holzfaserwerkstoff oder aus holzartigem Werkstoff, mit einem Schaft (3) und einem Befestigungsbereich zum Verbinden mit einem weiteren Verbindungsmittel, insbesondere einer Schraube oder einer Mutter, **dadurch gekennzeichnet, dass** der Schaft (3) einen Verbindungsabschnitt (24) und einen Außengewindeabschnitt (26) aufweist, wobei der Verbindungsabschnitt (24) sich von einem Bereich des Schafts (3), der im eingeschraubten Zustand des Verbindungsmittels (12; 50) an einer Oberfläche (20) des Werkstücks (1) angeordnet ist, bis zu dem Außengewindeabschnitt (26) erstreckt, wobei eine Länge des Verbindungsabschnitts (24) größer ist als eine Länge des Außengewindeabschnitts (26).

2. Verbindungsmittel nach Anspruch 1, **dadurch gekennzeichnet, dass** ein dem Außengewindeabschnitt (26) abgewandtes Ende des Verbindungsabschnitts (24) entweder ein Ende des Verbindungsmittels (12) bildet oder sich an das Ende des Verbindungsabschnitts (24) ein Bolzenabschnitt (52) mit Außengewinde anschließt.

3. Verbindungsmittel nach Anspruch 2, **dadurch gekennzeichnet, dass** der Außendurchmesser des Bolzenabschnitts (52) kleiner ist als der Außendurchmesser des Verbindungsabschnitts (24).

4. Verbindungsmittel nach wenigstens einem der vorstehenden Ansprüche, **dadurch gekennzeichnet, dass** der Verbindungsabschnitt (24) entweder glatt ist oder eine Oberflächenstruktur aufweist, die sich in radialer Richtung von maximal 10% des Kerndurchmessers des Schafts (3) über den Kerndurchmesser hinauserstreckt.

5. Verbindungsmittel nach wenigstens einem der vorstehenden Ansprüche, **dadurch gekennzeichnet, dass** die Länge des Verbindungsabschnitts (24) mindestens doppelt so groß ist wie die Länge des Außengewindeabschnitts (26), insbesondere dreimal so groß ist wie die Länge des Außengewindeabschnitts (26).

6. Verbindungsmittel nach wenigstens einem der vorstehenden Ansprüche, **dadurch gekennzeichnet, dass** der Außengewindeabschnitt (26) mindestens einen umlaufenden Gewindegang aufweist, der sich über mindestens 360° um den Schaft (3) erstreckt.

7. Verbindungsmittel nach wenigstens einem der vorstehenden Ansprüche, **dadurch gekennzeichnet, dass** in radialer Richtung gemessen eine Höhe der Gewindeflanken (34) zwischen 2/3 und 5/3 des Kerndurchmessers des Außengewindeabschnitts (26) beträgt.

8. Verbindungsmittel nach wenigstens einem der vorstehenden Ansprüche, **dadurch gekennzeichnet, dass** der Kerndurchmesser des Außengewindeabschnitts (26) dem Durchmesser des Verbindungsabschnitts (24) entspricht.

9. Verbindungsmittel nach wenigstens einem der vorstehenden Ansprüche, **dadurch gekennzeichnet, dass** ein Außendurchmesser des Außengewindeabschnitts (26) mindestens 1,5 bis maximal 4 mal so groß ist, insbesondere 2,7 mal so groß ist, wie ein Durchmesser des Verbindungsabschnitts (24).

10. Verbindungsmittel nach wenigstens einem der vorstehenden Ansprüche, **dadurch gekennzeichnet, dass** der Befestigungsbereich als Innengewinde (13) im Schaft (3) oder als Verlängerung des Schafts (3), insbesondere mit Außengewinde, ausgebildet ist,

11. Verbindungsmittel nach wenigstens einem der vorstehenden Ansprüche, **dadurch gekennzeichnet, dass** eine dem Verbindungsabschnitt (24) zugewandte Seite der Gewindeflanken (34) und eine dem Verbindungsabschnitt (24) abgewandte Seite der Gewindeflanken (34) einen Flankenwinkel (a) zwischen 10° und 20°, insbesondere 15°, einschließen.

12. Verbindungsmittel nach wenigstens einem der vorstehenden Ansprüche, **dadurch gekennzeichnet, dass** die Gewindeflanken des Außengewindeabschnitts (26) asymmetrisch ausgebildet sind.

13. Anordnung mit einem Werkstück und einem Verbindungsmittel nach wenigstens einem der vorstehenden Ansprüche, **dadurch gekennzeichnet, dass** ein dem Außengewindeabschnitt (26) abgewandtes Ende des Verbindungsabschnitts (24) des Schafts (3) im Bereich einer ersten Oberfläche (20) des Werkstücks (1) angeordnet ist und dass der Außengewindeabschnitt (26) vollständig innerhalb des Werkstücks (1) angeordnet ist.

14. Anordnung nach Anspruch 13, **dadurch gekennzeichnet, dass** der Außengewindeabschnitt (26) vollständig in einer Sacklochbohrung (2) innerhalb des Werkstücks (1) angeordnet ist.

15. Anordnung nach Anspruch 13 oder 14, **dadurch gekennzeichnet, dass** das Werkstück (1) plattenförmig ist und eine Dicke 2C aufweist, wobei der Außengewindeabschnitt (26) mindestens um die Länge C von der ersten Oberfläche (20) des Werkstücks (1) beabstandet ist.
